# EUROPÄISCHE PATENTSCHRIFT

(11) **EP 0 876 190 B1**
(45) Veröffentlichungstag und Bekanntmachung des Hinweises auf die Patenterteilung: **10.10.2001**
(21) Anmeldenummer: 96939019.4
(22) Anmeldetag: 13.11.1996
(51) Int. Cl.: B01D 46/04, B01D 29/11, B03C 3/017

(54) **OBERFLÄCHENFILTRATION UND -FILTER**
SURFACE FILTRATION AND SURFACE FILTER
FILTRATION EN SURFACE ET FILTRE APPROPRIE

(30) Priorität: 17.11.1995 DE 19542859
(43) Veröffentlichungstag der Anmeldung: 11.11.1998
(73) Patentinhaber: Hosokawa Mikropul Gesellschaft für Mahl-und Staubtechnik mBH, 51149 Köln (DE)
(72) Erfinder: KÄPPELER, Gerhard, D-51467 Bergisch Gladbach (DE); PEUKERT, Wolfgang, D-51503 Rösrath (DE); WADENPOHL, Christoph, D-53773 Hennef (DE)
(74) Vertreter: Leineweber, Jürgen, Dipl.-Phys.
(86) Internationale Anmeldenummer: EP9604960
(87) Internationale Veröffentlichungsnummer: WO9718884

(56) Entgegenhaltungen:
- WO-A-90/07382
- US-A- 2 513 174
- US-A- 4 229 189
- US-A- 4 323 373
- US-A- 5 217 511
- DATABASE WPI Week 9619 Derwent Publications Ltd., London, GB; Page 005, AN 96-182766 XP002027371 & JP 08 057 228 A (ISHIKAWAJIMA HARIMA HEAVY IND) , 5.März 1996

## Beschreibung

Die Erfindung bezieht sich auf einen Oberflächenfilter mit den Merkmalen des Oberbegriffs des Patentanspruchs 1. Außerdem bezieht sich die Erfindung auf ein Verfahren zum Betrieb dieses Oberflächenfilters.

Die Oberflächenfiltration dient der Staubabscheidung, d.h. der Abscheidung von Partikeln aus Gasen. Die Abscheidung der Teilchen erfolgt vorwiegend an der Oberfläche eines Filtermediums (Gewebe oder Nadelfilze aus Natur- oder Synthetikfasern), das in aller Regel von schlauch- oder taschenförmigen Filterelementen gebildet wird. An der Oberfläche des Filterelementes bildet sich ein sogenannter Staubkuchen aus. Dieser stellt die eigentliche hochwirksame Filterschicht dar, in der eine nahezu vollständige Abscheidung der Partikeln erfolgt und die das Filtermedium von einer irreversiblen Staubeinlagerung und damit zunehmenden Verstopfung schützt.

Als Folge eines Anwachsens der Staubschicht an der Filteroberfläche nimmt der Druckverlust kontinuierlich zu. Um einen stabilen Betrieb des Filters zu erreichen, muß der Filterkuchen periodisch entfernt werden. Bei schlauchförmigen, von außen nach innen durchströmten Filterelementen erfolgt die Abreinigung üblicherweise so, daß durch Einleiten von Druckluft in das Innere des Filterschlauches ein Überdruck erzeugt wird, wobei sich die Strömungsrichtung des Gases umkehrt und der an der Außenseite des Filtermediums befindliche Staubkuchen abgelöst werden kann. Voraussetzung dafür ist, daß die zwischen Filtermedium und Staubkuchen angreifenden Trennkräfte größer als die wirkenden Haftkräfte sind.

Schwierigkeiten beim Betrieb von Oberflächenfiltern können im wesentlichen unter zwei Aspekten auftreten:
- Verstopfen des Filtermediums durch irreversible Einlagerung von Partikeln. Dies wird insbesondere bei der Abscheidung feiner Stäube (x<1µm) in Verbindung mit niedrigen Rohgaskonzentrationen beobachtet.
- Ungenügende Abreinigung als Folge fest haftender Staubkuchen. Dieser Effekt tritt vorzugsweise bei der Abscheidung feiner und/oder klebriger Stäube sowie bei der Abscheidung von Partikeln aus feuchten Gasen oder bei Partikel-Tropfengemischen auf.

Aus der US-A-25 13 174 ist ein Oberflächenfilter der hier betroffenen Art bekannt. In einem horizontal durchströmten Gehäuse befindet sich eine vertikal angeordnete Filterschicht. Der Filterschicht unmittelbar vorgelagert sind Düsen, die der Bedüsung der Filterschicht mit einer Spülflüssigkeit dienen. Da die Wirkung der in geringem Abstand vor der Filterschicht befindlichen Düsen lokal beschränkt ist, muß eine große Vielzahl von Düsen vorhanden sein. Dadurch wird der Aufbau des Filters sehr aufwendig, insbesondere wenn relativ große Filterflächen realisiert werden müssen. Außerdem ist die Beanspruchung durch die unmittelbare Bedüsung hoch, so daß ein starker Verschleiß (mit der Folge geringer Standzeiten) auftritt.

Zum Stand der Technik gehört auch noch der Inhalt der DE-A- 27 31 755. Sie beschreibt Filter mit einer zentralen, in einem zylindrischen Gehäuse befindlichen, vertikal angeordneten Filterkerze. Das Rohgas wird tangential zugeführt und umströmt die Filterkerze wendelförmig von oben nach unten. Infolge einer hohen tangentialen Geschwindigkeitskomponente wird neben der von der Filterkerze bewirkten Abscheidung eine Trennung nach dem Zyklonprinzip erreicht. Bei der Reinigung von Abgasen, die bei der Abröstung von MOS₂ entstehen, wird das Rohgas mit Wasser besprüht.

Der vorliegenden Erfindung liegt die Aufgabe zugrunde, den Einsatzbereich von Oberflächenfiltern auf schwierige Anwendungsfälle auszudehnen.

Erfindungsgemäß wird diese Aufgabe durch die kennzeichnenden Maßnahmen und Merkmale der Patentansprüche gelöst.

Die besonderen Vorteile sowohl des erfindungsgemäßen Oberflächenfilters als auch des erfindungsgemäßen Betriebsverfahrens liegen darin, daß vor dem Auftreffen der Rohgase auf die Filterelemente eine intensive Durchmischung des Rohgases mit den Tröpfchen eines feindispersiven Nebels stattfindet. Dadurch kommt es in diesem Bereich zu einer Anlagerung der Verunreinigungen an den Tröpfchen. Ein Teil dieser Tropfen erreicht nicht mehr die Filterelemente, so daß der Staubanfall an den Filterelementen selbst reduziert ist. Ein weiterer Anteil der im Rohgas enthaltenen, bereits mit dem Nebel durchmischten Verunreinigungen bringt beim Erreichen der Rohgasseite der Filterelemente die erforderliche Spülflüssigkeit direkt mit (z.B. als Hülle), wodurch die Spülung des Filters unterstützt wird. Die intensive Durchmischung der feindispersiven Flüssigkeitstropfen mit dem Rohgas im Filtergehäuse hat ferner zur Folge, daß die Flüssigkeitstropfen alle Bereiche des Filtermediums erreichen können, so daß eine effektive Reinigung gewährleistet ist. Dadurch, daß der Staubanfall an den Filterelementen selbst reduziert ist und daß die Filterelemente ständig gereinigt werden, kann ein stabiler Betrieb des erfindungsgemäßen Filters mit langen Standzeiten erreicht werden. Auf eine Unterbrechung des Betriebs zum Zweck einer zusätzlichen Druckluftreinigung kann in aller Regel verzichtet werden.

Von besonderer Bedeutung bei diesem Verfahren ist die Art der Wasserzugabe, da aus mehreren Gründen eine ausreichende und möglichst gleichmäßige Benetzung des Filtermediums gewährleistet sein muß. Dabei ist die Ausbildung eines Filterkuchens zu verhindern, da ein eventuell sich ausbildender Filterkuchen zu einem deutlichen Anstieg des Druckverlustes führen würde (Kapillarphänomene), der aus energetischen Gründen nicht akzeptiert werden kann. Die klassische kuchenbildende Filtration, wie sie oben beschrieben wurde, ist beim nassen Betrieb demnach nicht sinnvoll. Besonders zweckmäßig ist es deshalb, bei einem Oberflächenfilter mit den Merkmalen des Oberbegriffs des Patentanspruchs 1 die Filterelemente im oberen Bereich des Filtergehäuses unterzubringen und sowohl die Düse(n) als auch die Mündung der Rohgaszuführungsleitung unterhalb der Filterelemente anzuordnen.

Weiterhin kommt der Spülflüssigkeit zu einem gewissen Teil die Funktion zu, die bei konventionellem Filtrationsbetrieb vom Staubkuchen übernommen wird, nämlich die Abscheidung der Partikeln zu bewirken und ihren Durchtritt ins Reingas zu verhindern.

In vielen industriellen Anwendungsfällen stellt sich die Aufgabe, neben partikelförmigen Verunreinigungen auch gasförmige Komponenten abzuscheiden. Diese Möglichkeit besteht bei einem naß betriebenen Oberflächenfilter durch die Wahl einer geeigneten Flüssigkeit oder durch Zudosierung geeigneter Sorbentien. Wird beispielsweise Kalkmilch (CaO-Lösung in H2O) als Spülflüssigkeit verwendet, dann besteht die Möglichkeit, neben staubförmigen Partikeln auch SO₂, SO₃, HCl oder HF abzuscheiden.

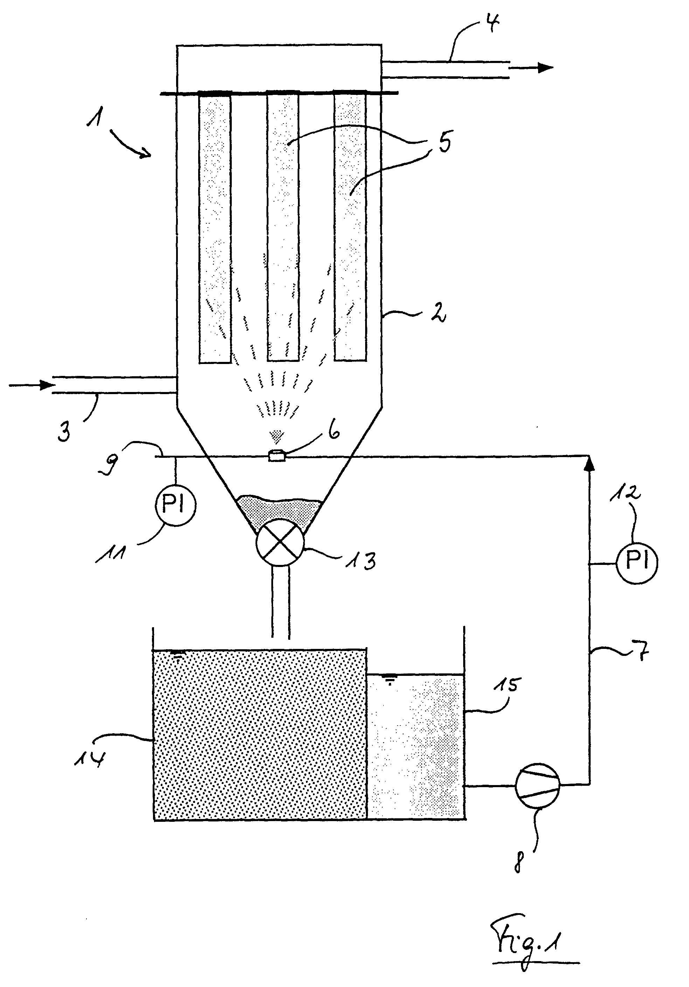

Einige Möglichkeiten, wie das Verfahren gestaltet werden kann, insbesondere wie die Zudosierung der Spülflüssigkeit unter Berücksichtigung der geschilderten Anforderungen denkbar ist, sowie weitere Vorteile und Einzelheiten der Erfindung sollen anhand der in den Figuren 1 bis 9 dargestellten Ausführungsbeispielen erläutert werden. Es zeigen
- Figuren 1 bis 3 Oberflächenfilter nach der Erfindung mit geschlossenen Filterschläuchen,
- Figuren 4 und 5 Oberflächenfilter mit offenen Filterschläuchen,
- Figur 6 einen Oberflächenfilter mit Filterkassetten,
- Figur 7 einen für die Behandlung von feuchten Gasen geeigneten Oberflächenfilter,
- Figur 8 einen Oberflächenfilter nach der Erfindung mit von elektrischen Feldern unterstützter Abscheidung und
- Figur 9 ein Anwendungsbeispiel für den Einsatz eines erfindungsgemäß ausgebildeten Oberflächenfilters in einer Sprühtrocknungsanlage.

Beim Ausführungsbeispiel nach Figur 1 und in allen weiteren Figuren sind der erfindungsgemäß ausgebildete Oberflächenfilter mit 1, sein Filtergehäuse mit 2, die Rohgasleitung mit 3 und die Reingasleitung mit 4 bezeichnet. Beim Filter 1 nach Figur 1 sind als Filterelemente im oberen Bereich des Filtergehäuses 2 aufgehängte, unten geschlossene Filterschläuche 5 vorgesehen, die von unten mit Spülflüssigkeit besprüht werden. Dazu sind im unteren Bereich des Filtergehäuses 2 eine oder mehrere Düsen 6 (Zweistoffdüse oder andere geeignete Vorrichtungen) angeordnet, die über die Leitung 7 mit der Förderpumpe 8 mit Spülflüssigkeit und über die Leitung 9 mit Druckgas (z.B. Luft) versorgt werden. Druckmeß- und Überwachungsgeräte sind mit 11 und 12 bezeichnet.

Während des Betriebs wird in unmittelbarer Nähe des Rohgaseintrittes 3 ein sehr feines Tropfenspektrum erzeugt, wie es schematisch in Figur 1 dargestellt ist. Die feindispersen Tropfen (typischer Durchmesser etwa 100 µm) folgen aufgrund ihrer geringen Sedimentationsgeschwindigkeit der Gasströmung und gelangen in gleicher Weise wie die im Rohgas befindlichen Partikeln auf die Filterschläuche 5. Durch die simultane Abscheidung von Partikeln und Wasser bildet sich bei ausreichendem Flüssigkeitsanteil eine fließfähige Suspension, die von den Filterschläuchen abläuft und aus dem Gehäuse 2 über die Schleuse 13 ausgetragen werden kann. In einem Sedimentationsbecken 14 erfolgt die Trennung von Feststoff und Spülflüssigkeit. Die abgetrennte Spülflüssigkeit wird dem Spülflüssigkeitsbehälter 15 zugeführt, so daß ein Kreislaufbetrieb möglich ist.

Der wesentliche Vorteil des beschriebenen Verfahrens besteht darin, daß durch die Erzeugung eines feindispersen Nebels gewährleistet wird, daß die Spülflüssigkeit ,die in gleicher Weise wie die Feststoffpartikel anfiltriert wird, bevorzugt an die Bereiche des Filtermediums gelangt, wo lokal hohe Strömungsgeschwindigkeiten - und damit hohe Partikelstromdichten - vorliegen, die ein entsprechend hohes Spülflüssigkeitsangebot erfordern. Durch diesen Effekt wird eine Stabilisierung des Betriebsverhaltens erreicht. Ein positiver Effekt der Anordnung der Zweistoffdüse 6 im Bereich des Rohgaseintrittes 3 besteht darin, daß hier eine Vorabscheidung von Partikeln durch die Anlagerung an Tropfen stattfinden kann, die bei entsprechender Größe im Filterhaus 2 absedimentieren, so daß der Staubanfall an den Filterschläuchen 5 reduziert wird.

Sollen neben der Abscheidung von Partikeln auch gasförmige Komponenten des Rohgases abgeschieden werden, kann dazu eine geeignete Spülflüssigkeit verwendet werden. Eine andere Möglichkeit besteht darin, Sorbentien zuzusetzen. Diese Zudosierung kann an verschiedenen Stellen erfolgen. Besonders vorteilhaft ist es, wenn die Zugabe von Sorbentien im Rohgaseintritt 3 erfolgt.

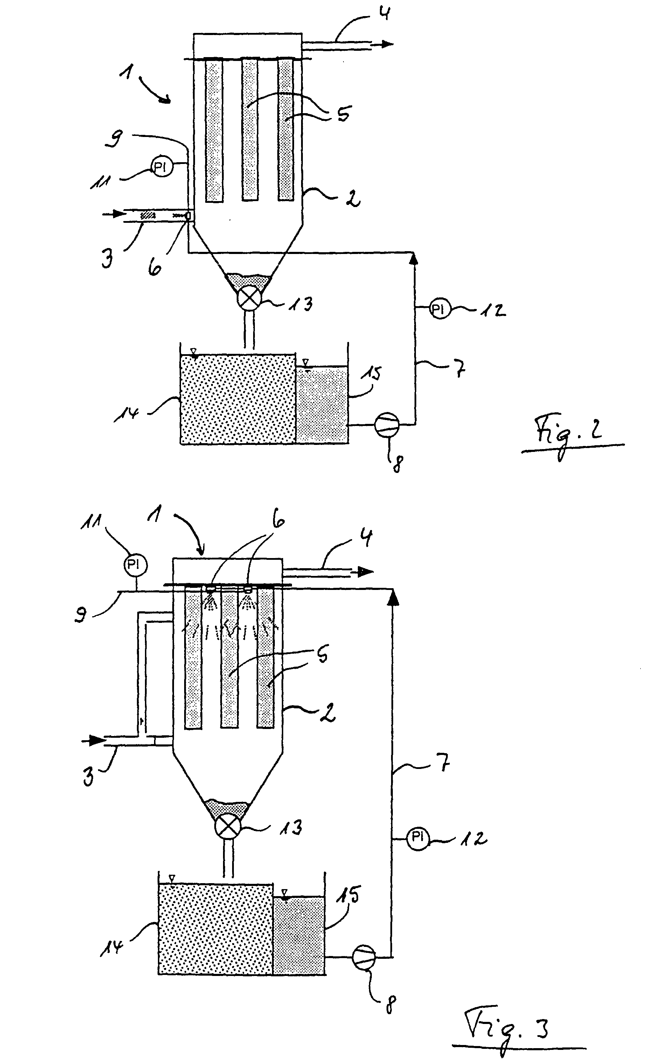

Beim Ausführungsbeispiel nach Figur 2 erfolgt die Zugabe der Spülflüssigkeit unmittelbar in das Rohgas. Dazu ist in der Rohgasleitung 3 eine Düse 6 mit ensprechend engem Sprühwinkel derart installiert, daß der Rohgasstrom und der Spülmittelstrom einander entgegengerichtet sind. Dadurch besteht die Möglichkeit, die dort erzielbaren hohen Relativgeschwindigkeiten zwischen Partikeln und Tropfen gezielt zur Anlagerung von Partikeln an Wassertropfen zu nutzen.

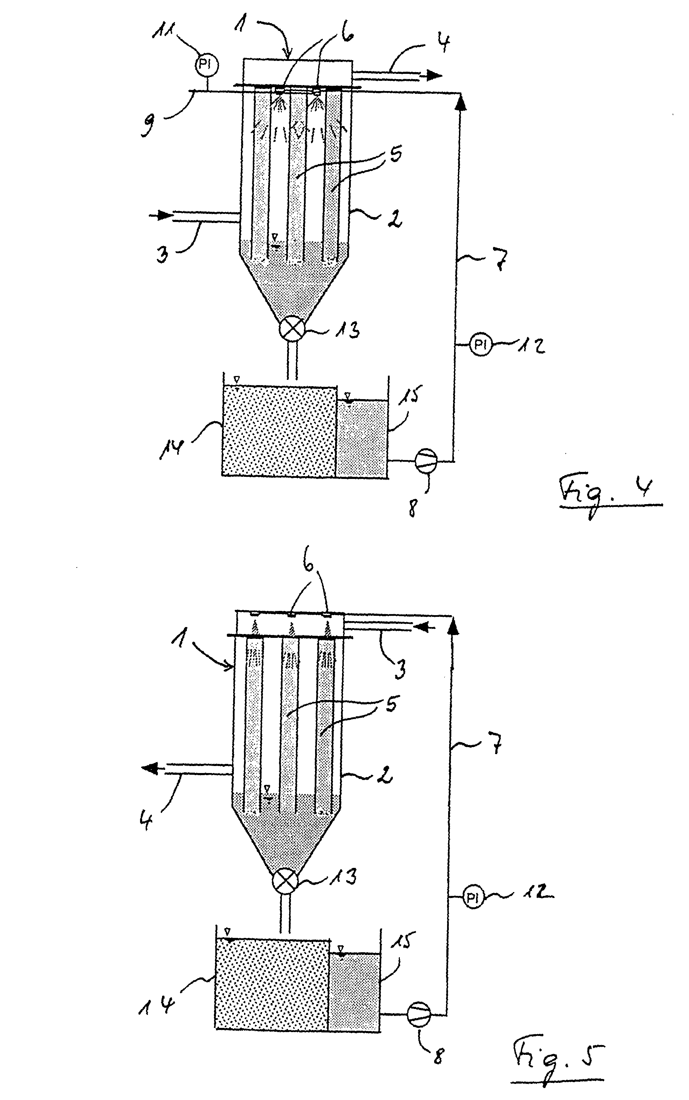

Eine weitere Variante stellt die direkte Bedüsung der Filterschläuche 5 dar, wie es schematisch in Figur 3 dargestellt ist. Die Düsen 6 befinden sich im oberen Bereich des Filtergehäuses. Hierbei können Düsen 6 unterschiedlichster Geometrie (z.B. eine den Schlauch umschließende Ringdüse) verwendet werden. Da die Spülflüssigkeit weniger fein zerstäubt werden muß als bei den Ausführungsbeispielen nach den Figuren 1 und 2, können auch mit niedrigem Wasserdruck betriebene Einstoffdüsen eingesetzt werden. Dies wirkt sich positiv auf die Betriebskosten der Anlage aus.

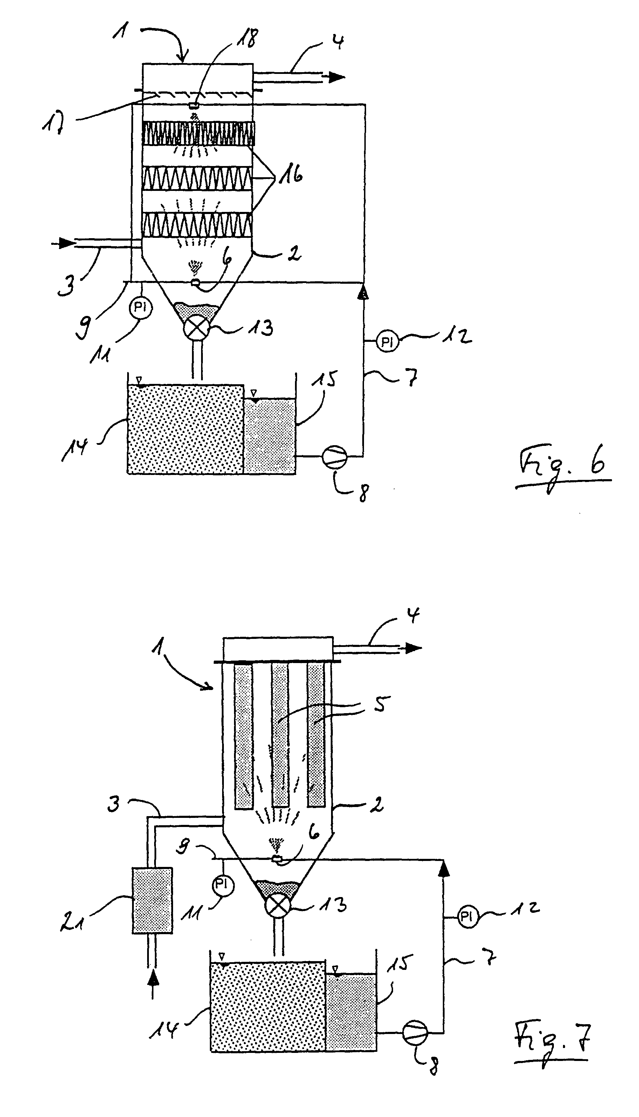

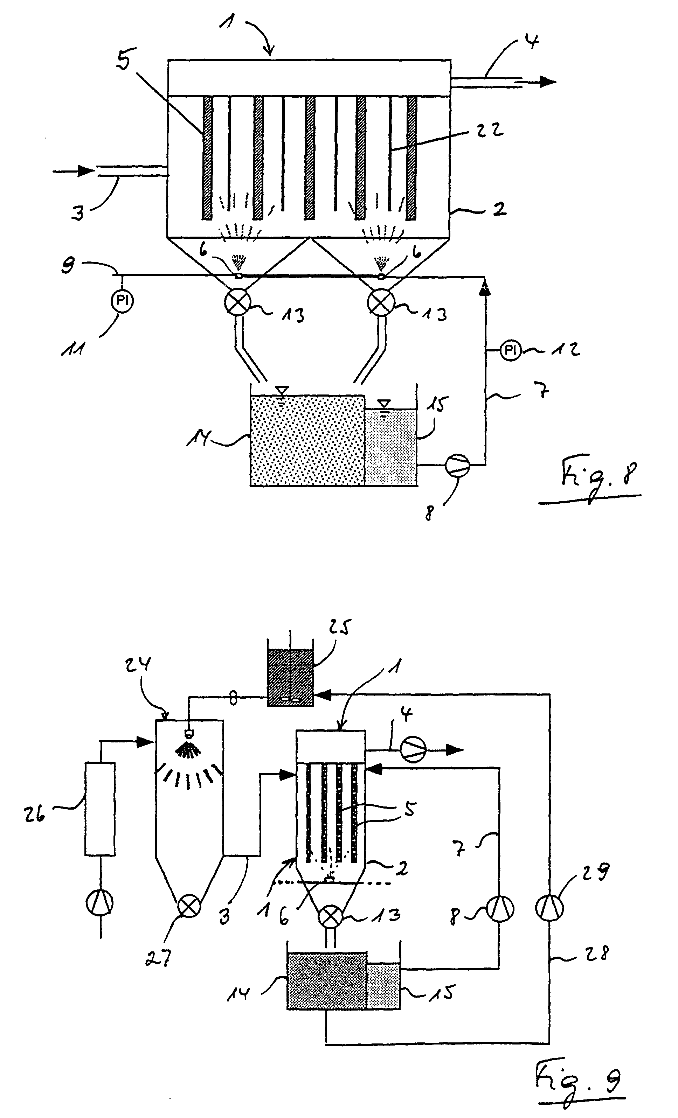

Bei den Ausführungsbeispielen nach den Figuren 4 und 5 sind die unteren Enden der Filterschläuche 5 offen. Weiterhin ist die Füllstandshöhe der aus Spülflüssigkeit und abgeschiedenen Partikeln bestehenden Suspension derart geregelt, daß die unteren Enden der Filterschläuche 5 ständig in die Suspension eintauchen. Bei einem in der üblichen Weise betriebenen Oberflächenfilter dieser Art, bei dem die Filterschläuche 5 von außen nach innen durchströmt werden (Figur 4), besteht der Vorteil, daß auch sich auf der Reingasseite ansammelnde Flüssigkeit (geringe Mengen der Spülflüssigkeit oder Suspension) frei ausfließen kann. Darüber hinaus besteht bei einem Oberflächtenfilter 1 mit nach unten offenen Filterschläuchen 5 die Möglichkeit, die Filtrationsrichtung umzukehren und die Filterschläuche von innen nach außen zu durchströmen, wie es schematisch in Figur 5 dargestellt ist. Da durch die gezielte Bedüsung der Schlauchinnenseite keinerlei Wandverluste auftreten können, ist eine optimale Ausnutzung der Spülflüssigkeit gewährleistet. Bei dieser Variante kann auch auf den Einsatz von Stützkörben verzichtet werden, da die Filterschläuche durch den Überdruck im Inneren stabilisiert werden.

Wie anfänglich erwähnt, wird ein Betrieb des Filters 1 ohne zusätzliche Druckluftabreinigung angestrebt. In diesem Fall ist man bei der Geometrie des Filtermediums nicht auf die übliche Schlauchform beschränkt, deren wesentlicher Vorteil in der guten Abreinigbarkeit, z.B. durch die Einleitung eines Druckstoßes, liegt. Es sind hier eine Vielzahl von Variationen denkbar, die im Hinblick auf Abscheidegrad, Druckverlust und Spülflüssigkeitsbedarf optimiert werden können.

Figur 6 zeigt exemplarisch eine Anordnung mit Filterelementen 16 in Kassettenbauweise. Das Filterhaus 2 ist über den ganzen Querschnitt mit den Filtermedien gefüllt. Unterhalb der Filterelemente befindet sich die Düse 6, die wie bei den Ausführungsbeispielen nach den Figuren 1 bis 4 mit Spülflüssigkeit und Druckgas versorgt wird. Bei Bedarf kann eine weitere Düse 18 oberhalb der Filterlemente angebracht werden, die permanent oder intermittierend betrieben wird. Oberhalb der Filterscheiben befindet sich ein Tropfenabscheider 17, der mitgerissene Spülflüssigkeit zurückhält. Da, wie es eingangs bereits erwähnt wurde, die kuchenbildende Filtration bei nassem Betrieb aus energetischen Gründen nicht möglich ist, ist es vorteilhaft, auf das Prinzip der Tiefenfiltration überzugehen und auch entsprechende Medien einzusetzen. Die Struktur der einzelnen Filterlemente 16 kann dabei in Anpassung an die von unten nach oben abnehmende Staubkonzentration und veränderliche Partikelgrößenverteilung unterschiedlich sein.

Eine weitere Variante der Spülflüssigkeitsaufgabe besteht dann, wenn das zu reinigende Gas eine ausreichend hohe Feuchte aufweist. Unter diesen Bedingungen ist es zweckmäßig, in der Rohgasleitung 3 eine Kondensationsstufe 21 anzuordnen (vgl. Figur 7). In dieser Stufe kann durch heterogene Kondensation eine Partikelvergrößerung erreicht werden. Dies bietet unter zwei Aspekten Vorteile. Erstens bewirkt die Zunahme der Partikelmasse eine Verbesserung der Partikelabscheidung aufgrund der höheren Trägheitseffekte. Zweitens wird der Spülflüssigkeitsbedarf zumindest teilweise direkt von den in den Tropfen eingebundenen Partikeln mit in das System eingebracht und gelangt ohne Wandverluste unmittelbar an das Filtermedium. Je nach Bedarf können zur Unterstützung des Feststoffaustrages zusätzlich Düsen 6 angebracht werden.

Aus zahlreichen Untersuchungen ist bekannt, daß sich das Abscheideverhalten von filternden Abscheidern durch die Nutzung elektrischer Kräfte deutlich verbessern läßt. Figur 8 stellt schematisch eine Möglichkeit dar, wie dies bei einem naß betriebenen Oberflächenfilter 1 der erfindungsgemäßen Art realisiert werden kann. Zwischen den geerdeten Schläuchen 5 werden Sprühelektroden 22 montiert, an denen es bei Anlegen einer ausreichend hohen Spannung zum Freisetzen von Ladungsträgern kommt, die zur Aufladung der Partikeln führt. Die geladenen Partikeln bewegen sich bevorzugt entlang der Feldlinien, die von den Sprühelektroden zu den Filterschläuchen gerichtet sind, und werden dort abgeschieden.

Einsatzmöglichkeiten des erfindungsgemäßen Verfahrens bestehen überall dort, wo feine und/oder klebrige Stäube oder Staub-Tropfengemische abzuscheiden sind und bei denen der Einsatz von konventionellen Schlauchfiltern oder auch von Naßwäschern aus verfahrenstechnischen bzw. wirtschaftlichen Gründen nicht möglich ist. Darüber hinaus ist die durch die Erfindung erzielte kontinuierliche Reinigung des Filters bei der Rückgewinnung von verderblichen Produkten oder bei solchen Prozessen von Vorteil, bei denen häufig wechselnde Produkte abzuscheiden sind. Als Beispiele seien erwähnt:
- Die Abscheidung von Blaurauch und Kondensationsaerosolen aus der Abluft von Schreddern, Schmelzöfen, Gießereien, bei der Spanplattenherstellung.
- Zur Produktrückgewinnung in der pharmazeutischen Industrie oder hinter Sprühtrocknern in der Lebensmittelindustrie (Kakao, Zucker, Milchpulver usw.).

Figur 9 zeigt exemplarisch eine mögliche Anwendung der Erfindung in einem Sprühtrocknungsprozeß, wie er z.B. bei der Milchpulverproduktion zu finden ist. Dem Sprühtrockner 24 werden das zu trocknende Produkt aus der Naßgutvorlage 25 sowie durch einen Gaserhitzer 26 geführte Luft zugeführt. Trockenes Produkt wird über die Schleuse 27 ausgetragen. Über die Rohgasleitung 3 gelangt die feuchte und mit Feststoff beladene Trocknungsluft in den nachgeschalteten Filter 1. Infolge der kontinuierlichen Spülung der Schläuche 5 wird ein zuverlässiger Austrag des abgeschiedenen Produktes auch bei hohen Feuchten gewährleistet, so daß eine hohe Betriebssicherheit des Filters auch bei Unregelmäßigkeiten im Betrieb des Trockners gegeben ist.

Der mit der Spülflüssigkeit ausgetragene Feststoff kann bei diesem Verfahren erneut in Prozeß eingebracht werden. Dazu steht das Sedimentationsbecken 14 über die Leitung 28 mit der Förderpumpe 29 mit der Naßgutvorlage 25 in Verbindung. Der Vorteil dieser Maßnahmen besteht darin, daß eine Abwasserbehandlung entfallen kann.

## Patentansprüche

1. Oberflächenfilter (1) mit einem Gehäuse (2), mit einem Rohgaseintritt (3), mit einem Reingasaustritt (4), mit im Gehäuse (2) befindlichen Filterelementen (5,16) und mit einer oder mehreren Düsen (6), die sich auf der Rohgasseite der Filterelemente (5) befinden und an eine Spülflüssigkeit führende Leitung (7) angeschlossen sind, **dadurch gekennzeichnet, daß** die Düse bzw. Düsen (6) als Zweistoffdüsen ausgebildet sind, die sowohl an die Spülflüssigkeitsleitung (7) als auch an eine Druckgasleitung (9) angeschlossen sind.

2. Filter nach Anspruch 1, **dadurch gekennzeichnet, daß** sich die Filterelemente (5,16) im oberen Bereich des Gehäuses (2) befinden und daß die Düse bzw. Düsen (6) unterhalb der Filterelemente (5,16) angeordnet sind.

3. Filter (1) nach Anspruch 1 oder 2, **dadurch gekennzeichnet, daß** eine oder mehrere auf die Filterelemente (9,16) gerichtete Düsen (6) in der Nähe des Rohgaseintrittes (3) angeordnet sind.

4. Filter (1) nach Anspruch 3, **dadurch gekennzeichnet, daß** sich eine Düse (6) in der Rohgasleitung (3) befindet.

5. Filter (1) nach einem der Ansprüche 1 bis 4, **dadurch gekennzeichnet, daß** der Rohgaseintritt (3) unterhalb der Filterelemente (5,6) angeordnet ist.

6. Filter (1) nach einem der Ansprüche 1 bis 5, **dadurch gekennzeichnet, daß** als Filterelemente im Filtergehäuse (2) aufgehängte Filterschläuche (5) vorgesehen sind.

7. Filter (1) nach einem der Ansprüche 1 bis 5, **dadurch gekennzeichnet, daß** etwa horizontal angeordnete, von unten nach oben durchströmte Filterscheiben (16) vorgesehen sind.

8. Filter (1) nach Anspruch 7, **dadurch gekennzeichnet, daß** sich auf der Reingasseite eine der Regeneration der Filterscheiben (16) dienende Düse (18) für Spülflüssigkeit befindet.

9. Filter (1) nach einem der Ansprüche 1 bis 8, **dadurch gekennzeichnet, daß** in der Rohgasleitung (3) ein Kondensator (21) angeordnet ist.

10. Filter (1) nach einem der Ansprüche 1 bis 9, **dadurch gekennzeichnet, daß** im Filtergehäuse (2) mit einer ausreichend hohen Spannung versorgte Sprühelektroden (22) angeordnet sind und daß die Filterelemente (9,16) geerdet sind.

11. Filter (1) nach einem der Ansprüche 1 bis 10, **dadurch gekennzeichnet, daß** der Filter einer der Trocknung eines pharmazeutischen Produkts oder eines Lebensmittels dienenden Anlage (24 bis 27) mit einer Naßvorlage (25) nachgeschaltet ist und daß das Sedimentationsbecken (14) über eine Leitung (28) mit einer Förderpumpe (29) mit der Naßvorlage (25) in Verbindung steht.

12. Filter (1), nach einem der vorhergehenden Ansprüche, **dadurch gekennzeichnet, daß** sich die Filterelemente (5,16) im oberen Bereich des Gehäuses (2) befinden und daß sich sowohl die Düse bzw. Düsen (6) als auch die Mündung der Rohgaszuführungsleitung (3) unterhalb der Filterelemente (5,16) befinden.

13. Verfahren zum Betrieb eines Oberflächenfilters (1) mit einem Gehäuse (2), mit einem Rohgaseintritt (3), mit einem Reingasaustritt (4), mit im Gehäuse (2) befindlichen Filterelementen (5,16) und mit einer oder mehreren Düsen (6), die sich auf der Rohgasseite der Filterelemente (5) befinden und an eine Spülflüssigkeit führende Leitung (7) angeschlossen sind, **dadurch gekennzeichnet, daß** die Düse bzw. Düsen (6) einen Spülflüssigkeitsnebel mit einem feindispersiven Tropfenspektrum mit einem typischen Tropfendurchmesser von etwa 100µm erzeugen und daß die Rohgase vor ihrem Auftreffen auf die Rohgasseite der Filterelemente (5,16) mit diesem Spülflüssigkeitsnebel besprüht werden.

14. Verfahren nach Anspruch 13, **dadurch gekennzeichnet, daß** die Zugabe des Spülflüssigkeitsnebels unmittelbar in das Rohgas erfolgt.

15. Verfahren nach Anspruch 14, **dadurch gekennzeichnet, daß** der Spülflüssigkeitsnebel derart in das Rohgas gesprüht wird, daß Rohgasstrom und Spülflüssigkeitsstrom einander entgegengerichtet sind.

16. Verfahren nach einem der Ansprüche 12 bis 15, **dadurch gekennzeichnet, daß** die aus Spülflüssigkeit und abgeschiedenen Partikeln bestehende Suspension aus dem Filter (1) ausgetragen und in ein Sedimentationsbecken (14) geleitet wird und daß die sich abtrennende Spülflüssigkeit im Kreislauf geführt wird.

17. Verfahren nach einem der Ansprüche 13 bis 16, **dadurch gekennzeichnet, daß** die Filterelemente von im Gehäuse (2) aufgehängten Filterschläuchen (5) oder von im wesentlichen horizontal angeordneten Filterkassetten (16) gebildet werden und daß die Filterelemente (5,16) von unten nach oben vom zu reinigenden Gas durchströmt und von unten mit der Spülflüssigkeit besprüht werden.

18. Verfahren nach Anspruch 17, **dadurch gekennzeichnet, daß** die Filtermedien der Filterkassetten (16) so gewählt sind, daß sie nach dem Prinzip der Tiefenfiltration arbeiten.

19. Verfahren nach einem der Ansprüche 13 bis 18, **dadurch gekennzeichnet, daß** bei feuchten Rohgasen vor dem Eintritt in das Filtergehäuse eine heterogene Kondensation herbeigeführt wird.

20. Verfahren nach einem der Ansprüche 13 bis 19, **dadurch gekennzeichnet, daß** das Abscheideverhalten mit Hilfe von mit einer ausreichend hohen Spannung versorgten Sprühelektrode (22), welche sich zwischen den geerdeten Filterelementen (9,16) befinden, verbessert wird.

21. Verfahren nach einem der Ansprüche 13 bis 20, **dadurch gekennzeichnet, daß** Spülflüssigkeiten verwendet werden, welche neben der Partikelabscheidung auch die Abscheidung gasförmiger Komponenten bewirken.

## Claims

1. Surface filter with a housing (2), with a raw gas inlet (3), with a pure gas outlet (4), with filter elements (5, 16) located in the housing (2) and with one or more nozzles (6), which are located on the raw gas side of the filter elements (5) and are connected to a line (7) conveying scouring liquid, **characterised in that** the nozzle or nozzles (6) are formed as two-fluid nozzles which are connected both to the scouring liquid line (7) and to a compressed gas line (9).

2. Filter according to claim 1, **characterised in that** the filter elements (5, 16) are located in the upper area of the housing (2) and that the nozzle or nozzles (6) are arranged below the filter elements (5, 16).

3. Filter (1) according to claim 1 or 2, **characterised in that** one or more nozzles (6) directed towards the filter elements (9, 16) are arranged in the vicinity of the raw gas inlet (3).

4. Filter (1) according to claim 3, **characterised in that** a nozzle (6) is located in the raw gas line (3).

5. Filter (1) according to one of claims 1 to 4, **characterised in that** the raw gas inlet (3) is arranged beneath the filter elements (5, 6).

6. Filter (1) according to one of claims 1 to 5, **characterised in that** suspended filter bags (5) are provided as filter elements in the filter housing (2).

7. Filter (1) according to one of claims 1 to 5, **characterised in that** roughly horizontally arranged filter discs (16) swept from below upwards are provided.

8. Filter (1) according to claim 7, **characterised in that** a nozzle (18) for scouring liquid and serving for the regeneration of the filter discs (16) is located on the pure gas side.

9. Filter (1) according to one of claims 1 to 8, **characterised in that** a condenser (21) is arranged in the raw gas line (3).

10. Filter (1) according to one of claims 1 to 9,
**characterised in that** discharge electrodes (22) supplied with a sufficiently high voltage are arranged in the filter housing (2) and that the filter elements (9, 16) are earthed,

11. Filter (1) according to one of claims 1 to 10,
**characterised in that** the filter is connected downstream of an installation (24 to 27) serving for the drying of a pharmaceutical product or a foodstuff and having a wet receiver (25) and that the sedimentation basin (14) is connected to the wet receiver (25) via a line (28) with a feed pump (29).

12. Filter (1) according to one of the preceding claims,
**characterised in that** the filter elements (5, 16) are located in the upper area of the housing (2) and that both the nozzle or nozzles (6) and the mouth of the raw gas feed line (3) are located beneath the filter elements (5, 16).

13. Method for operating a surface filter (1) with a housing (2), with a raw gas inlet (3), with a pure gas outlet (4), with filter elements (5, 16) located in the housing (2) and with one or more nozzles (6), which are located on the raw gas side of the filter elements (5) and are connected to a line (7) conveying scouring liquid, **characterised in that** the nozzle or nozzles (6) generate a scouring liquid mist with a finely dispersive drop spectrum with a typical drop diameter of about 100 µm and that the raw gases are sprayed with said scouring liquid mist prior to their impinging on the raw gas side of the filter elements (5, 16).

14. Method according to claim 13, **characterised in that** the addition of the scouring liquid mist takes place directly into the raw gas.

15. Method according to claim 13, **characterised in that** the scouring liquid mist is sprayed into the raw gas in such a way that raw gas current and scouring liquid flow are directed in opposite directions to one another.

16. Method according to one of claims 12 to 15, **characterised in that** the suspension consisting of scouring liquid and segregated particles is discharged out of the filter (1) and passed into a sedimentation basin (14) and that the scouring liquid separating off is recycled.

17. Method according to one of claims 13 to 16, **characterised in that** the filter elements are formed by filter bags (5) suspended in the housing (2) or by filter cartridges (16) arranged substantially horizontally and that the filter elements (5, 16) are swept from below upwards by the gas to be purified and sprayed from below with the scouring liquid.

18. Method according to claim 17, **characterised in that** the filter media of the filter cartridges (16) are selected so that they operate according to the principle of filter-medium filtration.

19. Method according to one of claims 13 to 18, **characterised in that** in the case of moist *raw* gases a heterogeneous condensation is brought about prior to the entry into the filter housing.

20. Method according to one of claims 13 to 19, **characterised in that** the segregation characteristics are improved with the aid of discharge electrodes (22) supplied with a sufficiently high voltage, which are located between the earthed filter elements (9, 16).

21. Method according to one of claims 13 to 20, **characterised in that** scouring liquids are used which produce in addition to the particle segregation also the segregation of gaseous components.

## Revendications

1. Filtre superficiel (1) avec un boîtier (2), avec une entrée de gaz brut (3), avec une sortie de gaz pur (4), avec des éléments filtrants (5, 16) situés dans le boîtier (2) et avec une ou plusieurs buses (6), qui se trouvent du côté gaz brut des éléments filtrants (5) et qui sont raccordées à une conduite (7) transportant un liquide de lavage, **caractérisé en ce que** la ou les buses (6) sont agencées sous forme de buses à deux substances qui sont raccordées à la conduite de liquide de lavage (7) et aussi à une conduite de gaz comprimé (9).

2. Filtre selon la revendication 1, **caractérisé en ce que** les éléments filtrants (5, 16) se trouvent dans le domaine supérieur du boîtier (2) et **en ce que** la buse ou les buses (6) sont disposées sous les éléments filtrants (5, 16).

3. Filtre (1) selon la revendication 1 ou 2, **caractérisé en ce qu'**une ou plusicurs buscs (6) dirigées vers les éléments filtrants (9, 16) sont disposées à proximité de l'entrée de gaz brut (3).

4. Filtre (1) selon la revendication 3, **caractérisé en ce qu'**une buse (6) se trouve dans la conduite de gaz brut (3).

5. Filtre (1) selon l'une des revendications 1 à 4, **caractérisé en ce que** l'entrée de gaz brut (3) est disposée sous les éléments filtrants (5, 6).

6. Filtre (1) selon l'une des revendications 1 à 5, **caractérisé en ce que** des sacs filtrants (5) suspendus dans le boîtier de filtre (2) sont prévus comme éléments filtrants.

7. Filtre (1) selon l'une des revendications 1 à 5, **caractérisé en ce qu'**il est prévu des plaques filtrantes (16) disposées sensiblement horizontalement, traversées de bas en haut.

8. Filtre (1) selon la revendication 7, **caractérisé en ce qu'**une buse (18) pour liquide de lavage servant à la régénération des plaques filtrantes (16) se trouve du côté gaz pur.

9. Filtre (1) selon l'une des revendications 1 à 8, **caractérisé en ce qu'**un condenseur (21) est disposé dans la conduite de gaz brut (3).

10. Filtre (1) selon l'une des revendications 1 à 9, **caractérisé en ce que** des électrodes d'émission (22) alimentées avec une tension suffisamment élevée sont disposées dans le boîtier de filtre (2) et **en ce que** les éléments filtrants (9, 16) sont reliés à la terre.

11. Filtre (1) selon l'une des revendications 1 à 10, **caractérisé en ce que** le filtre est branché en aval d'une installation (24 à 27) servant au séchage d'un produit pharmaceutique ou d'un aliment avec un récipient à liquide (25) et **en ce que** le bassin de sédimentation (14) est relié au récipient à liquide (25) par une conduite (28) munie d'une pompe de circulation (29).

12. Filtre (1) selon l'une des revendications précédentes, **caractérisé en ce que** les éléments filtrants (5, 16) se trouvent dans le domainc supérieur du boîtier (2) et **en ce que** la buse ou les buses (6) et l'embouchure de la conduite d'apport de gaz brut (3) sont situées sous les éléments filtrants (5, 16).

13. Procédé pour faire fonctionner un filtre superficiel (1) avec un boîtier (2), avec une entrée de gaz brut (3), avec une sortie de gaz pur (4), avec des éléments filtrants (5, 16) situés dans le boîtier (2) et avec une ou plusieurs buses (6) qui se trouvent du côté gaz brut des éléments filtrants (5) et qui sont raccordées à une conduite (7) transportant un liquide de lavage, **caractérisé en ce que** la buse ou les buses (6) produisent un brouillard de liquide de lavage à spectre de gouttes finement dispersif avec un diamètre de goutte typique d'environ 100 µm et **en ce que** les gaz bruts sont aspergés avec ce brouillard de liquide de lavage avant de parvenir sur le côté gaz brut des éléments filtrants (5, 16).

14. Procédé selon la revendication 13, **caractérisé en ce que** l'addition du brouillard de liquide de lavage a lieu directement dans le gaz brut.

15. Procédé selon la revendication 14, **caractérisé en ce que** le brouillard de liquide de lavage est pulvérisé dans le gaz brut de telle manière que le courant de gaz brut et le courant de liquide de lavage sont opposés l'un à l'autre.

16. Procédé selon l'une des revendications 12 à 15, **caractérisé en ce que** la suspension consistant en liquide de lavage et en particules séparées est extraite du filtre (1) et envoyée dans un bassin de sédimentation (14), et **en ce que** le liquide de lavage qui se sépare est mis en circulation.

17. Procédé selon l'une des revendications 13 à 16, **caractérisé en ce que** les éléments filtrants sont formés par des sacs filtrants (5) suspendus dans le boîtier (2) ou par des caissons filtrants (16) disposés sensiblement horizontalement et **en ce que** les éléments filtrants (5, 16) sont traversés de bas en haut par le gaz à épurer et sont aspergés par en bas avec le liquide de lavage.

18. Procédé selon la revendication 17, **caractérisé en ce que** les milieux filtrants des caissons filtrants (16) sont choisis de telle manière qu'ils fonctionnent selon le principe de la filtration en profondeur.

19. Procédé selon l'une des revendications 13 à 18, **caractérisé en ce que**, dans le cas de gaz bruts humides, une condensation hétérogène est réalisée avant l'entrée dans le boîtier du filtre.

20. Procédé selon l'une des revendications 13 à 19, **caractérisé en ce que** le comportement de séparation est amélioré à l'aide d'électrodes d'émission (22) alimentées avec une tension suffisamment élevée, qui se trouvent entre les éléments filtrants (9, 16) reliés à la terre.

21. Procédé selon l'une des revendications 13 à 20, **caractérisé en ce que** l'on utilise des liquides de lavage qui réalisent non seulement la séparation des particules mais aussi la séparation de composants gazeux.
